# EUROPÄISCHE PATENTSCHRIFT

(11) **EP 3 656 616 B1**
(45) Veröffentlichungstag und Bekanntmachung des Hinweises auf die Patenterteilung: **07.07.2021**
(21) Anmeldenummer: 19216786.4
(22) Anmeldetag: 07.07.2016
(51) Int. Cl.: B60R 21/231, D05B 93/00

(54) **AIRBAG MIT EINER UNTERTEILUNGSNAHT UND FAHRZEUGINSASSENSCHUTZSYSTEM**
AIRBAG COMPRISING A DIVIDING SEAM AND VEHICLE PASSENGER PROTECTION SYSTEM
SAC GONFLABLE COMPRENANT UNE SUTURE DE SEPARATION ET SYSTÈME DE PROTECTION DE PASSAGERS DE VÉHICULE

(30) Priorität: 07.07.2015 DE 202015004724 U
(43) Veröffentlichungstag der Anmeldung: 27.05.2020
(62) Teilanmeldung aus: 16745618.5
(73) Patentinhaber: Dalphi Metal España, S.A., 36213 Vigo (ES)
(72) Erfinder: SANTÍN NAVARRO, Pedro, José, 36204 Vigo (ES); CRESPO VIZÁN , María, 47013 Valladolid (ES)
(74) Vertreter: ZF Patentabteilung - DIPS

(56) Entgegenhaltungen:
- DE-A1-102010 062 422
- DE-A1-102011 005 549
- DE-U1- 29 517 372
- FR-A- 404 150

## Beschreibung

Die Erfindung betrifft eine Naht eines Airbag, insbesondere eines Curtain- und/ oder Seitenairbag, mit einer Unterteilungsnaht. Ferner betrifft die Erfindung Fahrzeuginsassenschutzsystem mit einem solchen Airbag. Eine Naht der eingangs genannten Art ist beispielsweise aus der auf die Anmelderin zurückgehenden DE 295 17 372 U1 bekannt.

Zum Schutz der Fahrzeuginsassen, insbesondere bei einem Seitenaufprall, sind in einem mehrspurigen Kraftfahrzeug seitlich angeordnete Airbags vorgesehen, die sich im Crashfall vor die Seitenfenster oder die Seitentüren des Fahrzeugs nach innen aufspannen. Diese Airbags sind üblicherweise aus wenigstens zwei Textilbahnen gebildet, die an ihren Seitenrändern miteinander vernäht sind. Auch können diese Airbags einstückig gewoben werden (OPW). Dadurch bildet sich jeweils ein Gassack, der sich nach Art eines Luftballons aufblasen lässt. Um die Form des Gassacks zu bestimmen, sind innerhalb der seitlichen Randnähte Abnäher bzw. Unterteilungsnähte vorgesehen, durch die die beiden Textilbahnen stellenweise miteinander verbunden sind. Diese Unterteilungsnähte trennen einzelne Kammern des Gassacks bzw. Airbags, jedoch nicht immer vollständig, so dass zwischen den Kammern weiterhin ein Gasaustausch möglich sein kann.

Die eingangs genannte DE 295 17 372 U1 zeigt eine Unterteilungsnaht 24, die durch einen Nahtvorlauf und einen Nahtrücklauf gebildet ist. Der Nahtvorlauf und der Nahtrücklauf bilden zwei in einer Schlaufe 25 verbundene Nahtabschnitte. Die Bildung der Schlaufe wird vorgeschlagen, um Spannungen am Nahtende im Textilmaterial beim Aufblasen des Airbags zu reduzieren.

Insgesamt weist die bekannte Naht einen Halsabschnitt auf, in welchem der Nahtvorlauf und der Nahtrücklauf im Wesentlichen geradlinig nebeneinander bzw. aufeinander verlaufen. An einem Ende der Naht ist ein Kopfabschnitt vorgesehen, der nach Art einer Öse bzw. Schlaufe gebildet ist. Im Kopfabschnitt sind der Nahtvorlauf und der Nahtrücklauf miteinander verbunden bzw. gehen ineinander über.

Es kann aus bestimmen Gründen erforderlich sein, die Größe der (meist tropfenförmig ausgebildeten) Schlaufe zu begrenzen, z.B. um die von der Schlaufe gebildete (ggf. nicht aufgeblasene) Kammer möglichst gering zu halten. Andererseits hat sich gezeigt, dass eine Mindestgröße der Schlaufe zweckmäßig ist, um den gewünschten Spannungsabbau am Nahtende bei der Expansion des Airbags zu erreichen. Eine einfache Verkleinerung /Skalierung der (tropfenförmigen) Schlaufe würde nämlich die Belastungen der Textilbahnen beim Aufblasen des Airbags erhöhen.

Die DE 10 2010 062 422 A1 und die DE 10 2011 005 549 A1 zeigen ebenfalls Nähte, die im Wesentlichen der Naht der eingangs genannten DE 295 17 372 U1 entsprechen und durch einen Nahtvorlauf und einen Nahtrücklauf gebildet sind, wobei der Nahtvorlauf und der Nahtrücklauf zwei in einer Schlaufe verbundene Nahtabschnitte bilden. Zudem zeigen die DE 295 17 372 U1, die DE 10 2010 062 422 A1 und die DE 10 2011 005 549 A1 einen Airbag mit einer Unterteilungsnaht, die einen Gewebeteil abnäht, der einen Halsabschnitt und einen im Wesentlichen halbkreisförmigen Kopfabschnitt aufweist, wobei ein Übergangsabschnitt zwischen dem Kopfabschnitt und dem Halsabschnitt vorgesehen ist, der sich vom Kopfabschnitt zum Halsabschnitt verjüngt. Die DE 10 2011 005 549 A1 zeigt außerdem eine nicht durchgängige Naht 33, bei der an den Halsabschnitt ein Kopfabschnitt mit mehreren konzentrisch angeordneten kreisförmigen Nähten anschließt. Auch bei diesen Nähten würde eine einfache Verkleinerung/Skalierung des Kopfabschnitts dazu führen, dass die Belastungen der Textilbahnen beim Aufblasen des Airbags erhöht werden.

Die Aufgabe der Erfindung ist es daher, eine Naht für einen Airbag anzugeben, die etwa am Nahtende im Airbagmaterial auftretende Spannungen beim Aufblasen des Airbags gering hält und gleichzeitig die angestrebte Reduzierung der Größe der von der Schlaufe gebildeten Kammer ermöglicht. Ferner ist es Aufgabe der Erfindung, einen Airbag und ein Fahrzeuginsassenschutzsystem mit einer solchen Naht anzugeben.

Erfindungsgemäß wird diese Aufgabe im Hinblick auf den Airbag durch den Gegenstand des Anspruchs 1 und im Hinblick auf das Fahrzeuginsassenschutzsystem durch den Gegenstand des Anspruchs 4 gelöst.

So beruht die Erfindung auf dem Gedanken, eine Naht eines Airbags, insbesondere eines Curtain- oder Seitenairbags, mit einem Halsabschnitt anzugeben, der aus einem Nahtvorlauf und einem Nahtrücklauf gebildet ist. Natürlich ist die erfinderische Naht auch bei jedem anderen Airbag, z.B. Knieairbag, Windscheibenairbag, Fahrerairbag, Beifahrerairbag usw. denkbar. Der Nahtvorlauf und der Nahtrücklauf verlaufen im Halsabschnitt im Wesentlichen geradlinig nebeneinander. Die Naht umfasst ferner einen Kopfabschnitt, in dem der Nahtvorlauf und der Nahtrücklauf miteinander verbunden sind bzw. ineinander übergehen. Erfindungsgemäß weisen der Nahtvorlauf und der Nahtrücklauf zwischen dem Halsabschnitt und dem Kopfabschnitt jeweils eine Krümmung auf. Die Krümmung des Nahtvorlaufs und die Krümmung des Nahtrücklaufs weisen im Wesentlichen die gleiche Orientierung auf, so dass zwischen dem Halsabschnitt und dem Kopfabschnitt ein Übergangsabschnitt mit einem gekrümmten Verlauf gebildet ist.

Durch den gekrümmten Verlauf des Übergangsabschnitts wird erreicht, dass die ursprünglich im Stand der Technik vorgesehene Tropfenform des Kopfabschnitts weitgehend beibehalten wird. Damit ist eine hohe Stabilität der Naht sichergestellt. Gleichzeitig werden die Dimensionen der von dem Kopfabschnitt umschlossenen (ggf. nicht aufzublasenden) Kammer jedoch reduziert. Die Erfindung schafft so eine Lösung zwischen der technisch guten Funktionalität des Kopfabschnitts und dem Wunsch nach einem möglichst geringen nicht aufgeblasenen Bereich des Airbags. Insbesondere kommt die Naht durch den gewählten Verlauf, insbesondere durch die Einbindung eines Übergangsabschnitts, auch ohne zusätzliche Verstärkungselemente aus. Dies erleichtert die Herstellung des Airbags und spart somit Herstellungskosten.

In der erfindungsgemäßen Ausführungsform ist vorgesehen, dass der Nahtvorlauf und der Nahtrücklauf im Übergangsabschnitt jeweils zwei gegenläufige Krümmungen bilden, so dass der Übergangsabschnitt im Wesentlichen einen S-förmigen Verlauf aufweist. Der S-förmige Verlauf kann so gestaltet sein, dass der Nahtvorlauf und der Nahtrücklauf im Wesentlichen einen seitlichen Versatz bilden. Mit dem S-förmigen Verlauf des Übergangsabschnitts wird erreicht, dass die Außenkontur der Naht insgesamt weiterhin einer Tropfenform entspricht, wobei sich der Nahtrücklauf in die Tropfenform einstülpt und so eine Bucht bildet. Jedenfalls kann die erfindungsgemäße Naht weiterhin in eine tropfenförmige Kontur einbeschrieben werden, die aus dem Stand der Technik bereits bekannt ist.

Die Naht, insbesondere der Halsabschnitt, der Übergangsabschnitt und der Kopfabschnitt, kann insgesamt im Wesentlichen fragezeichenförmig ausgebildet sein. Dabei verlaufen der Nahtvorlauf und der Nahtrücklauf entlang der Konturlinie des geschwungenen Teils Fragezeichens. Die Fragezeichenform beschränkt sich insofern auf den geschwungenen Teil. Der bei einem Fragezeichen unter dem geschwungenen Teil angeordnete Punkt wird im Rahmen der vorliegenden Anmeldung nicht berücksichtigt.

Bei der erfindungsgemäßen Naht kann außerdem bevorzugt vorgesehen sein, dass der Kopfabschnitt eine Längsachse und eine rechtwinklig zur Längsachse angeordnete Querachse aufweist, wobei die Summe der Längen der Längsachse und der Querachse höchstens 100 mm beträgt. Die Längsachse entspricht vorzugsweise der größtmöglichen Strecke, die sich in den Kopfabschnitt einbeschreiben lässt. Die Querachse steht senkrecht zur Längsachse und wird an der breitesten Stelle des Kopfabschnitts ermittelt. Relevant für die Definition der Längs- und Querachse ist die Reihenfolge des Messvorgangs. In einem ersten Schritt wird die größtmögliche Strecke ermittelt, die sich quer durch den Kopfabschnitt zwischen zwei Nahtbereichen erstreckt. Diese Strecke entspricht der Längsachse. Im zweiten Schritt wird eine Strecke rechtwinklig zur Längsachse ausgerichtet. Die rechtwinklig zur Längsachse ausgerichtete Strecke wird entlang der Längsachse verschoben, bis die größtmögliche Strecke erreicht ist, die sich in dieser Anordnung durch den Kopfabschnitt erstreckt. Diese größtmögliche Strecke entspricht der Querachse. Die Summe der Längen der Längs- und Querachse beträgt höchstens 100 mm. Andererseits wird durch die geometrische Neugestaltung der Naht, wie sie bei der Erfindung vorgeschlagen wird, eine ausreichende Fixierung zweier Airbag-Textilien erreicht, so dass auf zusätzliche Verstärkungselemente verzichtet werden kann.

In einer weiteren Ausgestaltung der Erfindung ist bevorzugt vorgesehen, dass der Kopfabschnitt eine Halbkreisform aufweist und radial gegenüberliegende Enden der Halbkreisform durch eine gedachte Linie verbindbar sind, in deren Verlängerung ein kopfseitiges Ende des Übergangsabschnitts angeordnet ist. Insgesamt ist vorteilhaft vorgesehen, dass der Kopfabschnitt seine Tropfenform, die aus dem Stand der Technik bereits bekannt ist, im Wesentlichen beibehält, wobei die Tropfenform zusätzlich in eine Krümmung übergeht. Insbesondere die Tropfenform insgesamt ist also bei der Erfindung vorteilhafterweise gekrümmt, so dass ein fließender Übergang zwischen dem Übergangsabschnitt und dem Kopfabschnitt erreicht wird. Dabei kann sich der Abstand des Nahtvorlaufs und des Nahtrücklaufs im Kopfabschnitt mit zunehmendem Abstand vom Übergangsabschnitt erhöhen. Die Tropfenform erstreckt sich nun jedoch im Wesentlichen auf einer Kreisbogenlinie um einen Rotationsmittelpunkt, der außerhalb des Kopfabschnitts selbst gelegen ist.

Ferner kann bei der Erfindung vorgesehen sein, dass der Übergangsabschnitt ein halsseitiges Ende aufweist, das durch eine Engstelle begrenzt ist, wobei ein Abstand zwischen dem Nahtvorlauf und dem Nahtrücklauf an der Engstelle 15 mm oder weniger beträgt. Zwei Nähte bzw. zwei Nahtläufe, beispielsweise ein Nahtvorlauf und ein Nahtrücklauf, gelten als einzige Doppelnaht, wenn ihr Abstand zueinander 15 mm oder weniger beträgt. Sobald der Nahtabstand mehr als 15 mm beträgt, gelten zwei nebeneinander verlaufende Nähte oder Nahtläufe als separate Nähte bzw. Nahtläufe. Insofern ist der Halsabschnitt der Naht vorzugsweise als Doppelnaht ausgebildet, in welcher der Nahtvorlauf und der Nahtrücklauf mit einem Abstand von 15 mm oder weniger zueinander verlaufen. Dieser Nahtabstand erhöht sich in Richtung zum Kopfabschnitt, wobei die 15 mm-Grenze an der Stelle überschritten wird, die den Beginn bzw. das halbseitige Ende des Übergangsabschnitts definiert.

Der Übergangsabschnitt endet vorzugsweise an der Verlängerung der gedachten Linie, die durch radial gegenüberliegende Enden der Halbkreisform des Kopfabschnitts definiert ist. Zwischen diesem halsseitigen Ende und dem kopfseitigen Ende verläuft der Übergangsabschnitt vorzugsweise S-förmig gekrümmt. Der Übergangsabschnitt weist also zwei gegenläufige Krümmungen auf, so dass der Nahtrücklauf und der Nahtvorlauf am kopfseitigen Ende des Übergangsabschnitts im Wesentlichen dieselbe Orientierung wie am halsseitigen Ende des Übergangsabschnitts aufweisen. Innerhalb des Übergangsabschnitts kann sich der Nahtabstand zwischen dem Nahtvorlauf und dem Nahtrücklauf in Richtung zum Kopfabschnitt weiter erhöhen. Es ist jedoch auch möglich, dass der Nahtvorlauf und der Nahtrücklauf im Übergangsabschnitt einen im Wesentlichen konstanten, gleichen Nahtabstand zueinander aufweisen.

Bei einer bevorzugten Ausführungsform der Erfindung ist vorgesehen, dass die Naht eine Unterteilungsnaht ist, die zwei Kammern des Airbags voneinander trennt. Dabei erstreckt sich die Naht vorzugsweise nur über einen Teil der Airbagfläche, so dass die voneinander getrennten Kammern des Airbags miteinander fluidverbunden bleiben.

Im Rahmen der vorliegenden Anmeldung wird außerdem eine Naht eines Airbags offenbart und beansprucht, die einen Nahtvorlauf und einen Nahtrücklauf aufweist, welche abschnittsweise nebeneinander verlaufen und unter Bildung einer Schlaufe ineinander übergehen. Die Schlaufe kann eine im Wesentlichen tropfenförmige Außenkontur aufweisen, wobei der Nahtrücklauf eine Bucht bildet, die sich in die tropfenförmige Außenkontur hineinstülpt. Die Naht kann zusätzlich eines oder mehrere der zuvor beschriebenen Merkmale aufweisen.

Mit der Beibehaltung der im Wesentlichen tropfenförmigen Außenkontur werden die Vorteile der Tropfenform aus dem Stand der Technik im Wesentlichen beibehalten. Insbesondere kann die Naht weiterhin zur Entlastung der Textilmaterialien des Airbags beitragen, wenn der Airbag aufgeblasen wird. Dennoch wird durch das Einstülpen des Nahtrücklaufs insgesamt die Größe des von der Naht umschlossenen Materialabschnittes reduziert, so dass ein ggf. nicht aufblasbarer bzw. nicht aufgeblasener Bereich des Airbags möglichst gering gehalten ist.

Im Rahmen der vorliegenden Anmeldung wird außerdem eine Naht eines Airbags offenbart und beansprucht, die Folgendes aufweist:
- einen ersten geradlinigen Abschnitt,
- einen zweiten, S-förmig gekrümmten Abschnitt,
- einen dritten, nach rechts gekrümmten halbbogenförmigen Abschnitt,
- einen vierten, nach rechts gekrümmten halbbogenförmigen Abschnitt,
- einen fünften, nach links gekrümmten halbbogenförmigen Abschnitt,
- einen sechsten, S-förmig gekrümmten Abschnitt, und
- einen siebten geradlinigen Abschnitt, der im Wesentlichen richtungsgleich bzw. parallel neben dem ersten geradlinigen Abschnitt verläuft.

Die Abschnitte gehen unmittelbar ineinander über. Die hier beschriebene Naht kann eines oder mehrere der Merkmale aufweisen, die zuvor im Zusammenhang mit der Naht eines Airbags beschrieben sind.

Die Naht weist vorzugsweise einen Nahtvorlauf und einen Nahtrücklauf auf, wobei der Nahtvorlauf durch den ersten bis dritten Abschnitt, und der Nahtrücklauf durch den vierten bis siebten Abschnitt gebildet ist. Der dritte und vierte Abschnitt der Naht weisen vorzugsweise unterschiedliche Krümmungsradien auf. Insbesondere kann der vierte Abschnitt einen kleineren Krümmungsradius als der dritte Abschnitt aufweisen.

Der erste und siebte Abschnitt der Naht bilden vorzugsweise einen Halsabschnitt der Naht. Der zweite und sechste Abschnitt der Naht bilden gemeinsam einen Übergangsabschnitt, der den Halsabschnitt mit einem Kopfabschnitt der Naht verbindet, wobei der Kopfabschnitt durch den dritten bis fünften Abschnitt gebildet ist.

Der fünfte und sechste Abschnitt bilden vorzugsweise eine Bucht des Nahtrücklaufs, die sich in die im Wesentlichen tropfenförmige Außenkontur der gesamten Naht hineinstülpt.

Explizit offenbart wird in diesem Zusammenhang auch ein Verfahren zur Herstellung einer Naht, insbesondere einer Unterteilungsnaht, eines Airbags. Bei dem Verfahren werden zwei Textilbahnen eines Airbags miteinander vernäht, wobei der Stich in einem ersten Abschnitt geradlinig, in einem zweiten Abschnitt S-förmig gekrümmt, in einem dritten Abschnitt, nach rechts gekrümmt halbbogenförmig, in einem vierten Abschnitt nach rechts gekrümmt halbbogenförmig, in einem fünften Abschnitt nach links gekrümmt halbbogenförmig, in einem sechsten Abschnitt S-förmig gekrümmt und in einem siebten Abschnitt geradlinig verläuft. Die Naht wird kontinuierlich als eine einzige Naht ausgeführt. Dabei werden die Krümmungsradien der Naht im dritten und vierten Abschnitt unterschiedlich eingestellt. Insbesondere wird der vierte Abschnitt mit einem kleineren Krümmungsradius genäht als der dritte Abschnitt. Die S-förmig gekrümmten Abschnitte verlaufen vorzugsweise im Wesentlichen mit gleichem Abstand nebeneinander.

Bei der hier beschriebenen Naht ist es bevorzugt, wenn die größtmögliche Strecke, die zwischen dem dritten Abschnitt und dem vierten Abschnitt messbar ist, eine Längsachse eines Kopfabschnitts der Naht bildet. Die größtmögliche Strecke zwischen dem dritten Abschnitt und dem fünften Abschnitt, die rechtwinklig auf der Längsachse des Kopfabschnitts steht, bildet vorzugsweise eine Querachse der Naht. Dabei ist bevorzugt vorgesehen, dass die Länge der Längsachse mit der Länge der Querachse in Summe höchstens 100 mm beträgt.

Die Erfindung betrifft darüber hinaus einen Airbag oder einen Gassack für ein Fahrzeuginsassenschutzsystem mit einer zuvor beschriebenen Naht.

Erfindungsgemäß wird im Rahmen der vorliegenden Anmeldung ein Airbag, insbesondere Curtainairbag, mit einer Unterteilungsnaht angegeben, die einen Gewebeteil abnäht, wobei der Gewebeteil einen Halsabschnitt und einen im Wesentlichen halbkreisförmigen Kopfabschnitt aufweist. Zwischen dem Kopfabschnitt und dem Halsabschnitt ist ein Übergangsabschnitt vorgesehen, der sich vom Kopfabschnitt zum Halsabschnitt verjüngt. Der Übergangsabschnitt bildet eine S-förmige Krümmung.

Vorzugsweise ist der Übergangsabschnitt durch einen Nahtvorlauf und einen Nahtrücklauf gebildet, die im Kopfabschnitt ineinander übergehen. Insgesamt kann die Unterteilungsnaht durch eine eingangs beschriebene Naht gebildet sein. Indem die Unterteilungsnaht einen Gewebeteil abtrennt, wird die Stabilität der Naht bzw. des gesamten Airbags erhöht. Insbesondere kann die Naht ohne zusätzliche Verstärkungselemente ausgeführt werden. Dies reduziert Herstellungskosten und Zeitaufwand.

Ein nebengeordneter Aspekt der Erfindung betrifft außerdem ein Fahrzeuginsassenschutzsystem mit einem erfindungsgemäßen Airbag gemäß der zuvor beschriebenen Merkmale.

Die Erfindung wird im Folgenden anhand eines Ausführungsbeispiels unter Bezugnahme auf die beigefügten, schematischen Zeichnungen näher erläutert. Darin zeigen

Fig. 1 eine Naht eines Airbags gemäß dem Stand der Technik; und

Fig. 2 eine erfindungsgemäße Naht eines Airbags nach einem bevorzugten Ausführungsbeispiel.

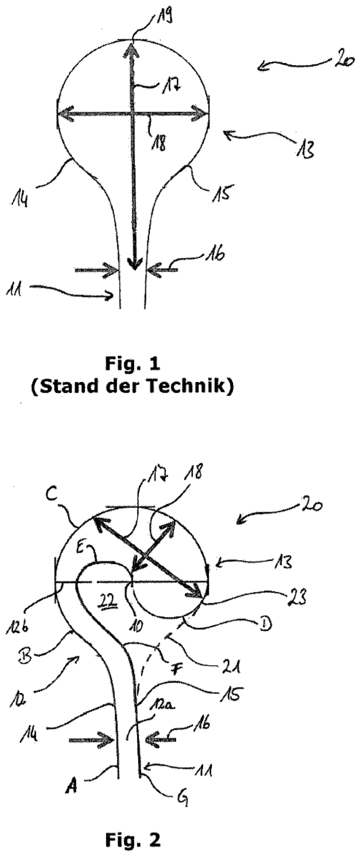

In Fig. 1 ist eine bekannte Naht gezeigt. Die Naht weist einen Halsabschnitt 11 auf, in welchem ein Nahtvorlauf 14 und ein Nahtrücklauf 15 nebeneinander geradlinig verlaufen. Denkbar ist auch, dass sich Nahtvorlauf 14 und Nahtrücklauf 15 decken, also zumindest abschnittsweise auf- bzw. übereinander verlaufen.

Im Halsabschnitt 11 ändert sich der Abstand zwischen dem Nahtvorlauf 14 und dem Nahtrücklauf 15. Ab einer Engstelle 16 beträgt der Abstand zwischen dem Nahtvorlauf 14 und dem Nahtrücklauf 15 15 mm oder weniger. Diese Engstelle 16 entspricht dem Beginn des kopfseitigen Endes des Halsabschnitts 11.

An den Halsabschnitt 11 fügt sich ein Kopfabschnitt 13 an. Der Kopfabschnitt 13 ist im Wesentlichen tropfenförmig ausgebildet. Im Kopfabschnitt 13 gehen der Nahtvorlauf 14 und der Nahtrücklauf 15 ineinander über.

Wie in Fig. 1 gut erkennbar ist, erhöht sich der Abstand zwischen dem Nahtvorlauf 14 und dem Nahtrücklauf 15 im Kopfabschnitt 13. Insbesondere sind der Nahtvorlauf 14 und der Nahtrücklauf 15 gegenläufig gekrümmt und gehen in ein halbkreisförmiges Ende des Kopfabschnitts 13 über.

In Fig. 1 sind außerdem eine Längsachse 17 und eine Querachse 18 des Kopfabschnitts 13 durch Doppelpfeile eingezeichnet. Die Längsachse 17 entspricht dabei der größtmöglichen Strecke, die in den Kopfabschnitt 13 einbeschrieben werden kann. Die Längsachse 17 erstreckt sich von der Engstelle 16 bis zu einem Scheitelpunkt 19.

Im Scheitelpunkt geht der Nahtvorlauf 14 in den Nahtrücklauf 15 über. Der Scheitelpunkt 19 ist dabei auf halber Strecke zwischen den Endpunkten der Halbkreisform des Kopfabschnitts 13 angeordnet.

Senkrecht zur Längsachse 17 erstreckt sich die Querachse 18. Die Querachse 18 entspricht dabei der größtmöglichen Strecke, die senkrecht zur Längsachse 17 in den Kopfabschnitt 13 einbeschrieben werden kann. Beim Stand der Technik verläuft die Querachse 18 somit zwischen den Endpunkten des halbkreisförmigen Teils des Kopfabschnitts 13.

Die Summe der Längen der Längsachse 17 und der Querachse 18 beträgt im Stand der Technik oft mehr als 100 mm. Dies kann zur Ausgestaltung von vergleichsweise großen, von der Naht umschlossenen Bereichen führen, die ggf. nicht aufblasbar sind. Die Erfindung schlägt daher eine Änderung der Naht-Geometrie vor, wie sie beispielsweise in Fig. 2 gezeigt ist.

Fig. 2 zeigt eine Naht, die geometrisch von der Form der Naht aus dem Stand der Technik abweicht. Insbesondere ist bei der Naht gemäß Fig. 2 vorgesehen, dass sie im Wesentlichen fragezeichenförmig ausgebildet ist. Konkret weist die Naht gemäß Fig. 2 einen Halsabschnitt 11 auf, der im Wesentlichen dem Halsabschnitt 11 gemäß dem Stand der Technik ähnelt. Ferner ist ein Kopfabschnitt 13 vorgesehen, der, analog zum Stand der Technik, eine Halbkreisform 23 aufweist. Der Kopfabschnitt 13 weist ebenfalls eine im Wesentlichen tropfenförmige Gestaltung auf, wobei die Tropfenform jedoch durch eine Drehung des Kopfabschnitts 13 insgesamt gekrümmt ist.

Konkret kann der Kopfabschnitt 13 als Tropfenform beschrieben werden, die um einen Rotationsmittelpunkt 10 rotiert. Der Rotationsmittelpunkt 10 entspricht bei dem Ausführungsbeispiel gemäß Fig. 2 einem Endpunkt der Halbkreisform 23 des Kopfabschnitts 13.

Zwischen dem Kopfabschnitt 13 und dem Halsabschnitt 11 ist ein Übergangsabschnitt 12 vorgesehen, der sich durch eine zusätzliche Krümmung auszeichnet. Der Übergangsabschnitt 12 umfasst den Nahtvorlauf 14 und den Nahtrücklauf 15, wobei der Nahtvorlauf 14 und der Nahtrücklauf 15 jeweils zwei Krümmungen aufweisen. Die Krümmung des Nahtvorlaufs 14 und die Krümmung des Nahtrücklaufs 15 sind in dieselbe Richtung orientiert. Insgesamt ergibt sich so ein S-förmig gekrümmter Übergangsabschnitt 12.

Der Übergangsabschnitt 12 ist einerseits begrenzt durch den Halsabschnitt 11. Insbesondere weist der Übergangsabschnitt 12 ein halsseitiges Ende 12a auf, an welchem der Halsabschnitt 11 eine Engstelle 16 aufweist. Die Engstelle 16 ist dort festgelegt, wo der Abstand zwischen dem Nahtvorlauf 14 und dem Nahtrücklauf 15 15 mm oder weniger beträgt. Kopfseitig ist der Übergangsabschnitt 12 andererseits durch ein kopfseitiges Ende 12b begrenzt, das auf einer Verlängerung einer Linie angeordnet ist, welche durch die Endpunkte der Halbkreisform 23 des Kopfabschnitts 13 definiert ist. Diese Linie ist zur Veranschaulichung in Fig. 2 eingezeichnet.

Insgesamt ist in Fig. 2 erkennbar, dass die erfindungsgemäße Naht eine Außenkontur 21 beibehält, die im Wesentlichen der Tropfenform gemäß dem Stand der Technik entspricht. Die Außenkontur 21 ist der Veranschaulichung halber durch eine gestrichelte Linie verdeutlicht. Insgesamt bildet die Naht also eine Schlaufe 20, die im Wesentlichen der ursprünglich tropfenförmigen Außenkontur 21 folgt. Der Nahtrücklauf bildet jedoch in Abkehr vom Stand der Technik eine Bucht 22, die sich in die tropfenförmige Außenkontur 21 einstülpt.

Die in Fig. 2 dargestellte Geometrie der Naht führt dazu, dass die Längsachse 17 und die Querachse 18 in Summe ihrer Längen den Wert von 100 mm unterschreiten. Die Längsachse 17 und die Querachse 18 sind in Fig. 2 durch entsprechende Doppelpfeile dargestellt. Die Längsachse 17 und die Querachse 18 sind dabei rechtwinklig zueinander orientiert. Dabei ist vorgesehen, dass die Längsachse 17 und die Querachse 18 nur dort in die Schlaufe 20 bzw. den Kopfabschnitt 13 der Naht einbeschrieben werden können, wo die Längsachse 17 und die Querachse 18 die Naht nicht schneiden. Mit anderen Worten müssen sowohl die Längsachse 17, als auch die Querachse 18 vollständig innerhalb des Kopfabschnitts 13 angeordnet sein.

Um den Nahtverlauf zu verdeutlichen, ist die Naht insgesamt in mehrere Abschnitte unterteilbar. Dabei ist ein erster Abschnitt A vorgesehen, der im Wesentlichen geradlinig verläuft. Der erste Abschnitt A ist durch den Nahtvorlauf 14 gebildet und erstreckt sich durch den Halsabschnitt 11 der Naht. An den ersten Abschnitt A schließt sich ein zweiter Abschnitt B an, der im Wesentlichen S-förmig gekrümmt verläuft. Der zweite Abschnitt B ist ebenfalls durch den Nahtvorlauf 14 gebildet und erstreckt sich entlang des Übergangsabschnitts 12 der Naht.

Der Nahtvorlauf 14 geht vom zweiten Abschnitt B in einen dritten Abschnitt C über, der im Wesentlichen halbbogenförmig gekrümmt und dem Kopfabschnitt 13 zugeordnet ist. Die Krümmung des dritten Abschnitts C ist nach rechts orientiert. Krümmungsmittelpunkt ist der Rotationsmittelpunkt 10.

Vom dritten Abschnitt C geht die Naht in einen vierten Abschnitt D über. Der vierte Abschnitt D ist dem Nahtrücklauf 15 zugeordnet und bildet die Halbkreisform 23 des Kopfabschnitts 13. Die Krümmung des vierten Abschnitts D ist ebenso wie der dritte Abschnitt C nach rechts orientiert. Der Krümmungsmittelpunkt liegt allerdings auf halber Strecke zwischen einem Endpunkt des dritten Abschnitts C und dem Rotationsmittelpunkt 10. Insgesamt weist der vierte Abschnitt D somit einen kleineren Krümmungsradius als der dritte Abschnitt C auf.

Vom vierten Abschnitt D verläuft der Nahtrücklauf 15 weiter in einen fünften Abschnitt E, der ebenfalls im Wesentlichen halbkreisförmig gekrümmt ist. Die Krümmung ist jedoch gegenläufig zur Krümmung des vierten Abschnitts D ausgebildet. Der fünfte Abschnitt E ist dem Kopfabschnitt 13 der Naht zugeordnet und endet an dem kopfseitigen Ende 12b des Übergangsabschnitts 12.

An dem fünften Abschnitt E schließt sich ein sechster Abschnitt F an, der einen S-förmig gekrümmten Verlauf aufweist. Der sechste Abschnitt F wird durch den Nahtrücklauf 15 gebildet. Der sechste Abschnitt F weist insgesamt einen gekrümmten Verlauf auf, der dem gekrümmten Verlauf des zweiten Abschnitts B entspricht und im Wesentlichen in dieselbe Richtung orientiert ist. So verlaufen der sechste Abschnitt F und der zweite Abschnitt B nebeneinander, vorzugsweise mit im Wesentlichen gleichbleibendem Abstand zueinander.

An der Engstelle 16 geht der sechste Abschnitt F in einen siebten Abschnitt G über, der im Wesentlichen geradlinig, insbesondere parallel zum ersten Abschnitt A, verläuft. Der siebte Abschnitt G ist durch den Nahtrücklauf 15 gebildet und gehört zum Halsabschnitt 11.

Wie in Fig. 2 gut erkennbar ist, verläuft die Längsachse 17 des Kopfabschnitts 13 vorzugsweise zwischen dem vierten Abschnitt D und dem dritten Abschnitt C. Die Querachse 18 verläuft zwischen dem fünften Abschnitt E und dem dritten Abschnitt C. Gegebenenfalls stehen die Längsachse 17 und die Querachse 18 senkrecht aufeinander.

### Bezuaszeichenliste

- 10: Rotationsmittelpunkt
- 11: Halsabschnitt
- 12: Übergangsabschnitt
- 12a: halsseitiges Ende
- 12b: kopfseitiges Ende
- 13: Kopfabschnitt
- 14: Nahtvorlauf
- 15: Nahtrücklauf
- 16: Engstelle
- 17: Längsachse
- 18: Querachse
- 19: Scheitelpunkt
- 20: Schlaufe
- 21: Außenkontur
- 22: Bucht
- 23: Halbkreisform

- A: erster Abschnitt
- B: zweiter Abschnitt
- C: dritter Abschnitt
- D: vierter Abschnitt
- E: fünfter Abschnitt
- F: sechster Abschnitt
- G: siebter Abschnitt

## Patentansprüche

1. Airbag, insbesondere Curtain- und/ oder Seitenairbag, mit einer Unterteilungsnaht, die einen Gewebeteil abnäht, wobei der Gewebeteil einen Halsabschnitt (11) und einen im Wesentlichen halbkreisförmigen Kopfabschnitt (13) aufweist, wobei zwischen dem Kopfabschnitt (13) und dem Halsabschnitt (11) ein Übergangsabschnitt (12) vorgesehen ist, der sich vom Kopfabschnitt (13) zum Halsabschnitt (11) verjüngt, und wobei der Übergangsabschnitt (12) eine s-förmige Krümmung bildet.

2. Airbag nach Anspruch 1,
**dadurch gekennzeichnet, dass**
der Übergangsabschnitt (12) durch einen Nahtvorlauf (14) und einen Nahtrücklauf (15) gebildet ist, die im Kopfabschnitt (13) ineinander übergehen.

3. Airbag nach Anspruch 1 oder 2,
**dadurch gekennzeichnet, dass**
die Unterteilungsnaht ohne zusätzliche Verstärkungselemente ausgeführt ist.

4. Fahrzeuginsassenschutzsystem mit einem Airbag nach einem der vorhergehenden Ansprüche.

## Claims

1. An airbag, especially a curtain and/or side airbag, comprising a dividing seam which separates a fabric part by sewing, wherein the fabric part has a neck portion (11) and a substantially semicircular head portion (13), wherein between the head portion (13) and the neck portion (11) a transition portion (12) tapering from the head portion (13) to the neck portion (11) is provided and wherein the transition portion (12) forms an S-shaped curvature.

2. The airbag according to claim 1,
**characterized in that**
the transition portion (12) is formed of an advance seam (14) and a return seam (15) which merge in the head portion (13).

3. The airbag according to claim 1 or 2,
**characterized in that**
the dividing seam is realized without any additional reinforcing elements.

4. A vehicle occupant protection system comprising an airbag according to any one of the preceding claims.

## Revendications

1. Airbag, en particulier airbag rideau et/ou airbag latéral, muni d'une couture de subdivision, laquelle resserre une pièce de tissu, pour lequel la pièce de tissu présente une partie de col (11) et une partie de tête (13) sensiblement de forme semi-circulaire, pour lequel, entre la partie de tête (13) et la partie de col (11) est prévue une partie de transition (12), laquelle partie de transition (12) se rétrécit de la partie de tête (13) à la partie de col (11), et la partie de transition (12) forme une courbure en forme de s.

2. Airbag selon la revendication 1,
**caractérisé en ce que**
la partie de transition (12) est formée par une couture avant (14) et une couture arrière (15), lesquels se rejoignent l'une dans l'autre dans la partie de tête (13).

3. Airbag selon la revendication 1 ou 2,
**caractérisé en ce que**
la couture de subdivision est exécutée sans éléments de renforcement supplémentaires.

4. Système de protection d'occupants d'un véhicule comprenant un airbag selon l'une quelconque des revendications précédentes.
